# FASCICULE DE BREVET EUROPEEN

(11) **EP 4 037 918 B1**
(45) Date de publication et mention de la délivrance du brevet: **28.08.2024**
(21) Numéro de dépôt: 20793801.0
(22) Date de dépôt: 25.09.2020
(51) Int. Cl.: B60B 29/00

(54) **DISPOSITIF DE MANUTENTION DE ROUE ET PROCÉDÉ UTILISANT UN TEL DISPOSITIF**
RADHANDHABUNGSVORRICHTUNG UND VERFAHREN MIT EINER SOLCHEN VORRICHTUNG
WHEEL-HANDLING DEVICE AND METHOD USING SUCH A DEVICE

(30) Priorité: 03.10.2019 FR 1910909
(43) Date de publication de la demande: 10.08.2022
(73) Titulaire: KNDS France, 78034 Versailles Cedex (FR)
(72) Inventeur: BERTRAND, Ludovic, 18023 Bourges (FR)
(74) Mandataire: Cabinet Chaillot
(86) Numéro de dépôt international: PCT/IB2020/059006
(87) Numéro de publication internationale: WO 2021/064535

(56) Documents cités:
- DE-U1- 202018 104 906
- FR-A- 1 105 779
- FR-A1- 2 409 224
- FR-A1- 2 702 204
- FR-A1- 3 002 014
- GB-A- 2 349 854
- SE-A1- 1 400 565

## Description

Le domaine technique de l'invention est celui des dispositifs de manutention pour roue de véhicule. La manutention de roue de véhicule est une opération délicate, en particulier durant les opérations de changement de roue et a fortiori quand il s'agit de roues volumineuses et lourdes comme des roues de véhicule blindé ou de poids lourds.

Afin de faciliter ce genre d'opération, il est connu du brevet FR2956635 d'utiliser un dispositif souple comportant des mailles qui entourent la bande de roulement de la roue, dispositif souple que l'on attache à un moyen de levage par une suspension de type grue, palan ou pont roulant par exemple. L'accrochage du dispositif se fait à la verticale du centre de gravité de la roue grâce à un câble équipé d'un crochet.

Les roues de véhicules militaires sont souvent logées sous des déports de caisse du véhicule, plaçant le centre de gravité de la roue sous ce déport. De ce fait lorsque l'on veut mettre une roue en place sur un essieu avec le dispositif précité, le câble reliant le dispositif au moyen de levage interfère avec la caisse bien avant que la roue occupe le déport et soit placée sur l'essieu. Si en plus l'opération doit se dérouler sur un terrain d'opération non aménagé cela devient particulièrement compliqué. Un outillage de transit secondaire au dispositif souple précité devient nécessaire ou à défaut cela doit être réalisé à la main par plusieurs personnels rendant l'opération pénible et dangereuse.

L'invention propose un dispositif de manutention qui permet grâce à un moyen de levage par suspension de mettre aisément en place une roue de véhicule en une seule opération de transit. On peut par exemple se référer au modèle d'utilité DE 20 2018 104906 U1, qui décrit un dispositif de manutention pour roue d'engin agricole comportant une potence portant une interface de levage et une interface de roue.

Avantageusement, le dispositif est compact et peut équiper un engin de dépannage.

La demande de brevet GB 2 349 854 A divulgue un dispositif de manutention pour roue tel que défini dans le préambule de la revendication 1.

Ainsi l'invention a pour objet un dispositif de manutention pour roue qui comporte un corps comportant en partie supérieure une interface de levage, destinée à être reliée à un moyen de levage, corps comportant sur un premier côté une interface de roue destinée à être fixée à une roue à manipuler, et sur un second côté opposé au premier une interface dite de contrepoids sur laquelle est fixé un contrepoids, l'interface de levage étant positionnée de telle sorte que, lorsqu'une roue est fixée au dispositif, le centre de gravité de l'ensemble formé par le dispositif et la roue se situe sensiblement à la verticale de l'interface de levage, positionnant ainsi l'axe de la roue à l'horizontale, lequel dispositif est caractérisé en ce que le contrepoids comporte un triangle de remorquage et l'interface de contrepoids comporte un point de fixation haut pour s'interfacer avec une extrémité d'un premier bras du triangle de remorquage et un point de fixation bas pour s'interfacer avec une extrémité d'un second bras du triangle de remorquage.

Avantageusement, l'interface de roue pourra être reliée au corps par un axe de pivotement dont l'axe est destiné à être positionné coaxialement à celui de la roue.

De préférence, la distance D entre le centre de gravité de la roue et l'interface de levage est suffisante pour qu'un câble du moyen de levage soit espacé d'une distance E d'un véhicule et n'interfère pas avec celui-ci lorsqu'on place la roue dans un déport de caisse du véhicule.

Est également décrit ici un procédé de manutention mettant en œuvre le dispositif de manutention selon l'une des caractéristiques précédentes, procédé caractérisé en ce que :
- on fixe le dispositif par son interface de roue avec une roue,
- on accroche le dispositif avec un câble d'un moyen de levage,
- on déplace le dispositif portant la roue par le moyen de levage.

Selon une variante de ce procédé, on pourra fixer au moins une élingue entre l'interface de levage et un point de fixation solidaire du dispositif et situé à distance de l'interface de levage puis on attachera le câble du moyen de levage au dispositif par l'intermédiaire d'un moyen de réglage, tel un anneau monté coulissant sur l'élingue.

L'invention sera mieux comprise à la lecture de la description suivante, description faite à la lumière des dessins en annexe, dessins selon lesquels :
[Fig.1] représente une vue d'un dispositif selon l'invention, interfacé avec son environnement.
[Fig.2] représente une vue d'un dispositif selon un second mode de réalisation de l'invention, interfacé avec son environnement.
[Fig.3] représente une vue d'un dispositif selon l'invention lors d'une phase d'utilisation.
[Fig.4] représente une vue d'un dispositif selon l'invention selon une variante d'utilisation.

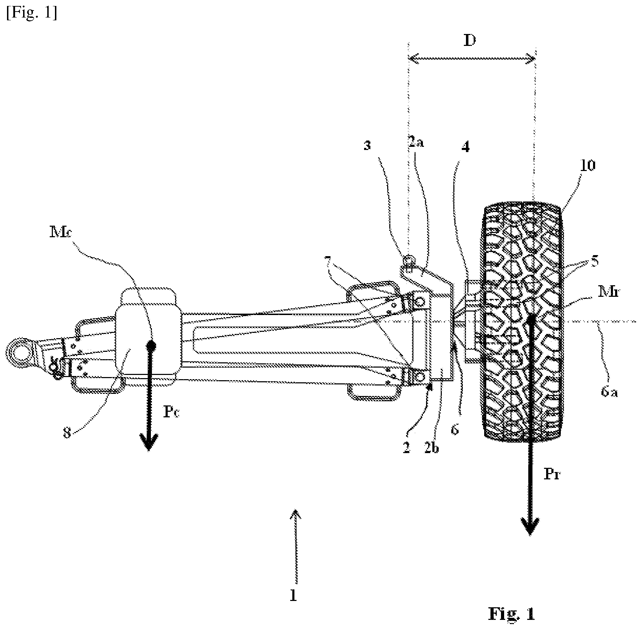

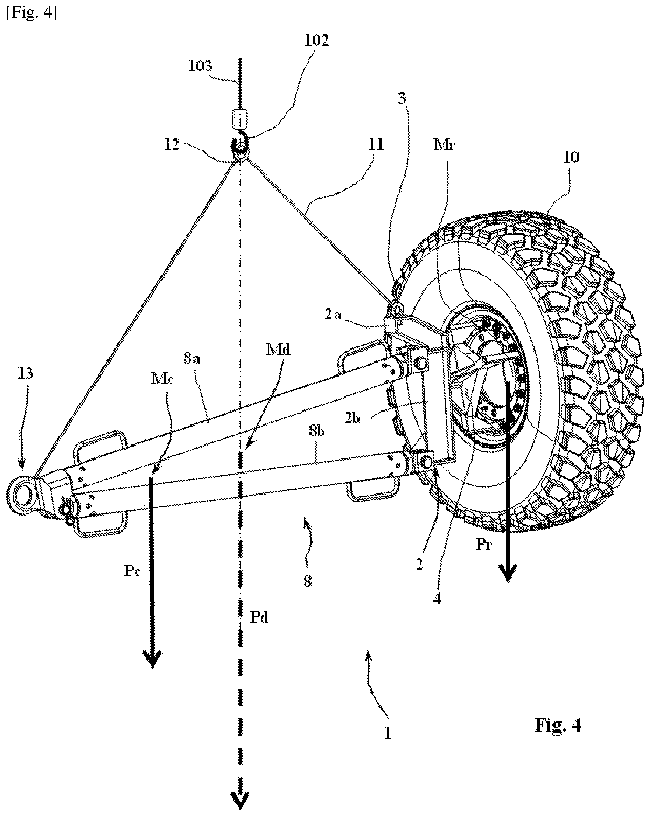

Selon la figure 1, un dispositif 1 selon l'invention comporte un corps 2 comportant une partie supérieure 2a assemblée à une partie inférieure 2b l'ensemble formant une potence 2. La partie supérieure 2a comporte une interface de levage 3 (telle un anneau) destinée à correspondre avec un moyen de levage (moyen de levage non représenté). Un mode de réalisation du corps 2 est plus particulièrement visible à la figure 4.

La partie inférieure 2b, qui est un bloc ou une barre destiné à être positionné verticalement comme représenté sur cette figure 1, comporte sur un premier côté une interface de roue 4 destinée à recevoir une roue 10 à manipuler. A cet effet, l'interface de roue pourra comporter par exemple des goujons 5 aptes à correspondre avec des perçages d'une jante de la roue 10 (perçages non représentés).

L'interface de roue 4 comporte un axe 6, qui la relie à la partie inférieure 2b, et qui peut tourner par rapport à cette partie inférieure 2b. L'axe géométrique 6a de l'axe 6 est destiné à être positionné coaxialement avec l'axe central de la roue. La rotation de l'axe 6 permet de faciliter le positionnement des goujons en regard des perçages de la jante.

On note que l'interface de levage 3 est située à une distance D du centre de gravité Mr de la roue 10.

Un second côté de la partie inférieure 2b du corps 2 comporte une interface de contrepoids 7. Cette interface de contrepoids 7 est destinée à recevoir un contrepoids 8 qui a pour fonction d'équilibrer, par son propre poids Pc, le poids Pr de la roue 10 lorsqu'on soulève le dispositif 1 portant une roue par l'interface de levage 3, de manière à ce que l'axe 6a de la roue 10 soit sensiblement horizontal lorsque le dispositif 1 est suspendu par l'interface de levage 3.

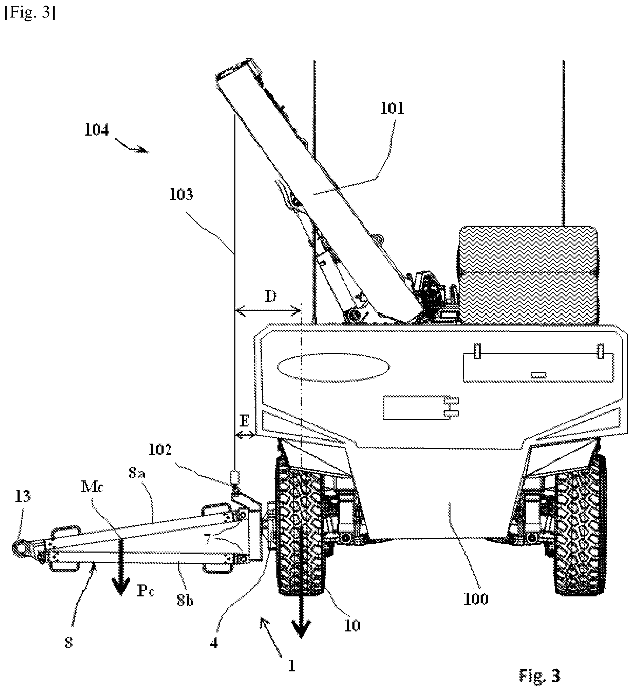

Comme illustré à la figure 3 lorsque l'on veut procéder au changement d'une roue 10 d'un véhicule 100, on solidarise le dispositif 1 avec la roue 10 grâce à l'interface de roue 4. Pour plus de commodité l'interface de roue 4 peut en effet tourner autour de son axe géométrique 6a afin d'aligner les moyens de fixation (voir goujons 5 à la figure 1) avec des perçages de la roue 10.

Dans un second temps, le dispositif 1 est accroché par son interface de levage 3 à un moyen de levage 104 comportant : une grue 101, comportant un câble 103 auquel est attaché un crochet 102.

Lors de la conception du dispositif, l'Homme du Métier choisira la distance D entre le centre de gravité de la roue 10 (sensiblement le plan médian de la roue) et l'interface de levage 3 de manière à ce que le câble 103 du moyen de levage 104 soit espacé d'une distance E du véhicule 100 et n'interfère pas avec celui-ci.

En conséquence, l'Homme du Métier choisira un contrepoids 8 dont le poids Pc et la position de son centre de gravité Mc sont déterminés afin d'assurer les conditions d'équilibre précitées.

Dans un troisième temps le contrepoids 8 sera fixé au dispositif 1 au niveau des interfaces de contrepoids 7.

Enfin la roue 10 pourra être désaccouplée du véhicule 100 et transiter jusqu'à une position éloignée du véhicule.

La remise en place de la roue ou d'une nouvelle roue se fera en déroulant les opérations précédentes en ordre inverse. Le changement de roue représenté figure 3 est un auto dépannage, mais un dépannage depuis un véhicule tiers comportant un moyen de levage se déroulera de façon l'identique.

On note que le dispositif 1 selon l'invention est simple à installer puisqu'il ne nécessite pas le déplacement d'un outillage lourd mais seulement du dispositif 1 puis d'un contrepoids 8. On note également que la manutention de la roue 10 se fait avec une seule opération de transfert, sans risque ni pénibilité pour des opérateurs.

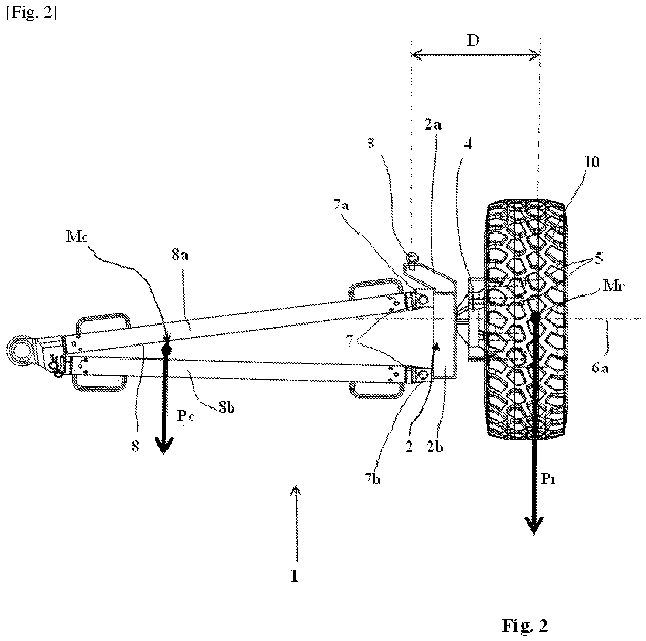

Le mode de réalisation des figures 2 à 4, permet d'optimiser l'emport à bord d'un véhicule 100 de type dépanneur. Dans ce mode de réalisation, il est avantageux d'utiliser des équipements de bord comme contrepoids 8. Ainsi, l'usage d'un triangle de remorquage 8, qui est un équipement massif et long, permet de contrebalancer aisément le poids de la roue 10.

Pour cela, une extrémité d'une première barre 8a du triangle de remorquage est rendue solidaire de l'interface de contrepoids 7 au niveau d'un premier point de fixation 7a et une seconde barre 8b est rendue solidaire de l'interface de contrepoids 7 au niveau d'un second point de fixation 7b.

Sur les figures, l'interface de levage 3 est disposée à l'extrémité supérieure de la partie supérieure 2a du corps 2.

Cette partie supérieure 2a forme ainsi un bras qui s'écarte du corps 2 et qui fixe la distance D entre le centre de gravité de la roue Mr et l'interface de levage 3. Ce bras a une longueur qui est définie pour assurer l'équilibre du dispositif portant une roue avec l'axe 6a horizontal et avec une distance D raisonnable (de l'ordre de 300 mm).

Il peut s'avérer que, suite à l'usure du pneumatique porté par la roue ou la perte de l'enveloppe pneumatique, le contrepoids 8 devienne trop lourd et le centre de gravité Md de l'ensemble formé par le dispositif 1 portant la roue 10 ne se trouve plus alors à la verticale de l'anneau de l'interface de levage 3.

Pour compenser alors le poids Pr de la roue 10 sans imposer de modification ou de remplacement de la partie supérieure 2a du corps 2, une élingue 11, comme visible à la figure 4, peut être prévue. Cette élingue 11 permet de relier l'interface de levage 3 et un point de fixation 13 solidaire d'une extrémité du dispositif 1 (ici le point de fixation 13 est l'anneau de traction du triangle de remorquage 8). L'élingue 11 passe par un moyen de réglage 12 formé par un anneau qui peut glisser sur l'élingue et un crochet 102 de la grue est attaché à l'anneau 12.

L'anneau 12 constitue donc un moyen de réglage 12 permettant de positionner le crochet 102 de la grue à la verticale du centre de gravité Md de l'ensemble (de poids Pd) formé par la roue 10 et le dispositif 1 équipé du contrepoids 8. D'autre types d'élingues et de moyens de réglage sont envisageables comme par exemple deux chaînes dont on réglera la longueur en faisant varier le nombre de maillons en tension entre le contrepoids et le crochet par exemple.

## Revendications

1. Dispositif de manutention (1) pour roue (10) comportant un corps (2) comportant en partie supérieure (2a) une interface de levage (3), destinée à être reliée à un moyen de levage (103), corps (2) comportant sur un premier côté une interface de roue (4) destinée à être fixée à une roue (10) à manipuler, et sur un second côté opposé au premier une interface (7) dite de contrepoids sur laquelle est fixé un contrepoids (8), l'interface de levage (3) étant positionnée de telle sorte que, lorsqu'une roue (10) est fixée au dispositif (1), le centre de gravité (Md) de l'ensemble formé par le dispositif (1) et la roue (10) se situe sensiblement à la verticale de l'interface de levage (3), positionnant ainsi l'axe de la roue à l'horizontale, dispositif **caractérisé en ce que** le contrepoids (8) comporte un triangle de remorquage (8) et l'interface de contrepoids (7) comporte un point de fixation haut (7a) pour s'interfacer avec une extrémité d'un premier bras (8a) du triangle de remorquage (8) et un point de fixation bas (7b) pour s'interfacer avec une extrémité d'un second bras (8b) du triangle de remorquage (8).

2. Dispositif (1) selon la revendication 1, **caractérisé en ce que** l'interface de roue (4) est reliée au corps (2) par un axe de pivotement (6) destiné à être positionné coaxialement à l'axe de la roue (10).

3. Dispositif (1) selon une des revendications 1 ou 2, **caractérisé en ce que** la distance D entre le centre de gravité de la roue (10) et l'interface de levage (3) est suffisante pour qu'un câble (103) du moyen de levage (104) soit espacé d'une distance E d'un véhicule (100) et n'interfère pas avec celui-ci lorsqu'on place la roue (10) dans un déport de caisse du véhicule (100).

## Patentansprüche

1. - Handhabungsvorrichtung (1) für ein Rad (10), aufweisend einen Körper (2), der im oberen Teil (2a) eine Hubschnittstelle (3) aufweist, die zur Verbindung mit einem Hubmittel (103) bestimmt ist, wobei der Körper (2) auf einer ersten Seite eine Radschnittstelle (4) aufweist, die zur Befestigung an einem zu handhabenden Rad (10) bestimmt ist, und auf einer zweiten Seite gegenüber der ersten eine als Gegengewicht bezeichnete Schnittstelle (7), an der ein Gegengewicht (8) befestigt ist, wobei die Hubschnittstelle (3) derart positioniert ist, dass, wenn ein Rad (10) an der Vorrichtung (1) befestigt ist, das Schwerkraftzentrum (Md) der aus der Vorrichtung (1) und dem Rad (10) gebildeten Anordnung sich etwa in der Vertikalen der Hubschnittstelle (3) befindet, so dass die Achse des Rades in der Horizontalen positioniert wird, wobei die Vorrichtung **dadurch gekennzeichnet ist, dass** das Gegengewicht (8) ein Abschleppdreieck (8) aufweist und die Gegengewichtschnittstelle (7) einen hohen Befestigungspunkt (7a) aufweist, um mit einem Ende eines ersten Arms (8a) des Abschleppdreiecks (8) eine Schnittstelle zu bilden und einen niedrigen Befestigungspunkt (7b), um mit einem Ende eines zweiten Arms (8b) des Abschleppdreiecks (8) eine Schnittstelle zu bilden.

2. - Vorrichtung (1) nach Anspruch 1, **dadurch gekennzeichnet, dass** die Radschnittstelle (4) mit dem Körper (2) durch eine Schwenkachse (6) verbunden ist, die bestimmt ist, zur Achse des Rades (10) koaxial positioniert zu sein.

3. - Vorrichtung (1) nach einem der Ansprüche 1 oder 2, **dadurch gekennzeichnet, dass** der Abstand D zwischen dem Schwerkraftzentrum des Rades (10) und der Hubschnittstelle (3) ausreichend ist, damit ein Kabel (103) des Hubmittels (104) in einem Abstand E von einem Fahrzeug (100) beabstandet ist und sich nicht mit diesem überschneidet, wenn man das Rad (10) des Fahrzeugs (100) platziert.

## Claims

1. - A handling device (1) for a wheel (10), comprising a body (2) comprising, in an upper part (2a), a lifting interface (3), intended to be connected to a lifting means (103), which body (2) comprises, on a first side, a wheel interface (4) intended to be attached to a wheel (10) to be manipulated, and on a second side opposite the first, a so-called counterweight interface (7) whereupon a counterweight (8) is attached, the lifting interface (3) being positioned such that, when a wheel (10) is attached to the device (1), the center of gravity (Md) of the assembly formed by the device (1) and the wheel (10) is located substantially vertically to the lifting interface (3), thus positioning the axis of the wheel horizontally, the device being **characterised in that** the counterweight (8) comprises a towing triangle (8) and the counterweight interface (7) comprises a top attachment point (7a) for interfacing with one end of a first arm (8a) of the towing triangle (8) and a bottom attachment point (7b) for interfacing with one end of a second arm (8b) of the towing triangle (8).

2. - The device (1) according to claim 1, **characterised in that** the wheel interface (4) is connected to the body (2) by a pivot shaft (6) intended to be positioned coaxially with the axis of the wheel (10).

3. - The device (1) according to one of claims 1 or 2, **characterised in that** the distance D between the center of gravity of the wheel (10) and the lifting interface (3) is sufficient for a cable (103) of the lifting means (104) to be spaced apart by a distance E from a vehicle (100) and not to interfere with the latter when the wheel (10) is placed in a wheelhouse of the vehicle (100) .
